# EUROPÄISCHE PATENTSCHRIFT

(11) **EP 1 209 051 B1**
(45) Veröffentlichungstag und Bekanntmachung des Hinweises auf die Patenterteilung: **18.02.2004**
(21) Anmeldenummer: 01127222.6
(22) Anmeldetag: 16.11.2001
(51) Int. Cl.: B60S 1/60, B60S 1/52

(54) **Zusammenschluss zweier Kunststoffteile**
Joining two plastic parts
Raccordement de deux pièces en plastique

(30) Priorität: 25.11.2000 DE 10058703; 27.09.2001 DE 10147725
(43) Veröffentlichungstag der Anmeldung: 29.05.2002
(73) Patentinhaber: Dynamit Nobel Kunststoff GmbH, 91781 Weissenburg (DE)
(72) Erfinder: Wild, René, 91781 Weissenburg (DE)
(74) Vertreter: Uppena, Franz, Dr.

(56) Entgegenhaltungen:
- DE-C- 198 163

## Beschreibung

Die Erfindung betrifft den Zusammenschluss zweier Kunststoffteile als lösbare, formschlüssige Verbindung.

Beim Zusammenschluss zweier Kunststoffteile als unlösbare stoffschlüssige Verbindung mittels Ultraschallschweißen oder als formschlüssige Verbindung mittels Ultraschallvernietung können aufgrund der Verbindetechnik Veränderungen auf der Oberfläche der zusammengefügten Werkstücke auftreten, die den optischen Eindruck stören. So können sich die Verbindungsstellen nach dem Lackieren der verbundenen Teile abzeichnen. Beim Zusammenfügen der Teile vor dem Schweißen ist eine genaue Positionierung der Teile erforderlich, die schwierig einzuhalten ist, da sich die Teile gegeneinander verschieben können. Bei verschweißten Teilen ist es bei einem Defekt eines Teils erforderlich, alle Teile auszuwechseln, was unnötige Kosten verursacht. Weiterhin erfordert das Verschweißen von Werkstücken zusätzlich Maschinen und Werkzeuge.

Die Aufgabe der Erfindung besteht darin, den Zusammenschluss von Kunststoffteilen zu vereinfachen und dabei die Unversehrtheit der Oberfläche zu gewährleisten.

Die Lösung der Aufgabe erfolgt mit Hilfe der Merkmale des ersten Anspruchs. Vorteilhafte Ausgestaltungen der Erfindung werden in den abhängigen Ansprüchen beansprucht.

Der Zusammenschluss zweier Kunststoffteile erfolgt erfindungsgemäß dadurch, dass das eine Kunststoffteil als Trägerteil und das andere Teil als ein auf das Trägerteil aufzuschiebendes Teil ausgebildet ist, das mit diesem eine formschlüssige Verbindung folgender Art eingeht: Das aufzuschiebende Teil, hier als Deckel bezeichnet, ist in Aufschieberichtung gesehen mit sich gegenüberliegenden taschenförmigen Aufnahmen ausgestattet, hier Taschen genannt, die durch Zungen am Deckel gebildet werden und zum Einschieben leistenförmiger Randbereiche des Trägerteils, hier Leisten genannt, dienen. Es kann nur jeweils eine Tasche auf einer Seite vorgesehen sein. Vorteilhaft, insbesondere hinsichtlich Stabilität des Zusammenschlusses und im Hinblick auf die geometrische Gestaltung der Ränder des Trägerteils, sind am Deckel jeweils mindesten zwei Taschen auf den sich in Aufschieberichtung gegenüberliegenden Seiten vorgesehen, die mit geringem Abstand nebeneinander liegen.

Um einen Zusammenschluss zwischen dem aufzuschiebenden Teil, dem Deckel, und dem Trägerteil herzustellen, müssen die Leisten des Trägerteils in die Taschen des Deckels eingeschoben sein. Zum Zusammenschluss der beiden Teile ist eine Aufschieberichtung vorgesehen, die von einem vorderen Ende des Trägerteils mit einer Leiste wegweist in Richtung auf das gegenüberliegende, hintere Ende mit einer Leiste. Damit das Aufschieben des Deckels auf das Trägerteil möglich, ist, ist am Trägerteil, in Aufschieberichtung gesehen, die vordere Leiste mindestens um die Breite der hinteren Leiste verbreitert und die der vorderen Leiste des Trägerteils zugeordneten Taschen des Deckels sind zusätzlich zur Breite der vorderen Leiste des Trägerteils mindestens um die Breite der hinteren Leiste vertieft. Der Abstand zwischen dem Grund der vorderen Taschen und den Rändern der Zungen der gegenüberliegenden, hinteren Taschen ist mindestens geringfügig größer als der Abstand der Ränder der Leisten auf dem Trägerteil voneinander.

Zum vorgesehenen Zusammenschluss der beiden Kunststoffteile wird der Deckel zunächst so auf das Trägerteil aufgesetzt, dass, in Aufschieberichtung gesehen, die vordere Leiste des Trägerteils vor den ihr zugeordneten Taschen des Deckels zu liegen kommt. Beim Aufschieben in Aufschieberichtung wird diese Leiste in die Taschen geschoben. Nach Einschieben der vorderen Leiste bis auf den Grund der Taschen sind die gegenüberliegenden Taschen so weit über die hintere Leiste des Trägerteils gerutscht, dass der Rand der hinteren Leiste des Trägerteils vor den Öffnungen der ihr zugeordneten Taschen des Deckels zu liegen kommt. Nach Zurückschieben des Deckels gegen die Aufschiebrichtung gleitet die hintere Leiste des Trägerteils ebenfalls in die ihr zugeordneten Taschen und fixiert so den Deckel formschlüssig auf dem Trägerteil.

In vorteilhafter Ausgestaltung der Erfindung weist das Trägerteil Rippen auf, an denen die Zungen der Taschen beim Aufschieben anstoßen. Sie dienen zum Positionieren des Deckels auf dem Trägerteil. Beim Zurückschieben des Deckels gegen die Aufschieberichtung zur Herstellung des Zusammenschlusses rutscht die hintere Leiste des Trägerteils unter die Zungen der Taschen. Dabei schlagen die Zungen der Taschen an die im hinteren Bereich des Trägerteils angeordneten Rippen an und positionieren den Deckel.

In weiterer vorteilhafter Ausgestaltung der Erfindung sind, in Aufschieberichtung gesehen, die vorderen Taschen am Deckel jeweils mit einem Federelement ausgestattet, das aus der Zunge der Tasche gebildet wird und gegen die Rippe auf dem Trägerteil drückt. Beim Aufschieben des Deckels drücken die Federelemente bereits gegen die Rippe auf dem vorderen Bereich des Trägerteils und werden gespannt. Im aufgesetzten Zustand drücken die Federelemente weiterhin gegen die Leiste des Trägerteils und stehen somit unter Spannung. Dadurch wird der Deckel in seiner Position gehalten, ohne dass eine unlösbare Verbindung der beiden Teile erforderlich ist.

Zum Entfernen des Deckels ist dieser in Aufschieberichtung gegen die Federn so weit zu verschieben, dass die Zungen der hinteren Taschen die hintere Leiste des Trägerteils freigeben. Nach Anheben des Deckels so weit, dass die Zungen über dieser Leiste liegen, und Verschieben des Deckels in Gegenrichtung zur Aufschieberichtung geben auch die vorderen Taschen die vordere Leiste des Trägerteils frei, so dass der Deckel von dem Trägerteil abgehoben werden und gegen ein anderes Teil ausgewechselt werden kann, ohne Beschädigung des Trägerteils und des Deckels.

Durch ein Ausführungsbeispiel, das eine Abdeckung einer Scheinwerferreinigungsanlage im Stoßfänger eines Kraftfahrzeugs zeigt, wird die Erfindung näher erläutert.

Es zeigen:
- Figur 1: den Zusammenschluss eines Trägerteils und eines Deckels im zusammengesetzten Zustand,
- Figur 2: den Deckel als Einzelteil und
- Figuren 3,4 und 5: Varianten von Federelementen an den Zungen der Taschen.

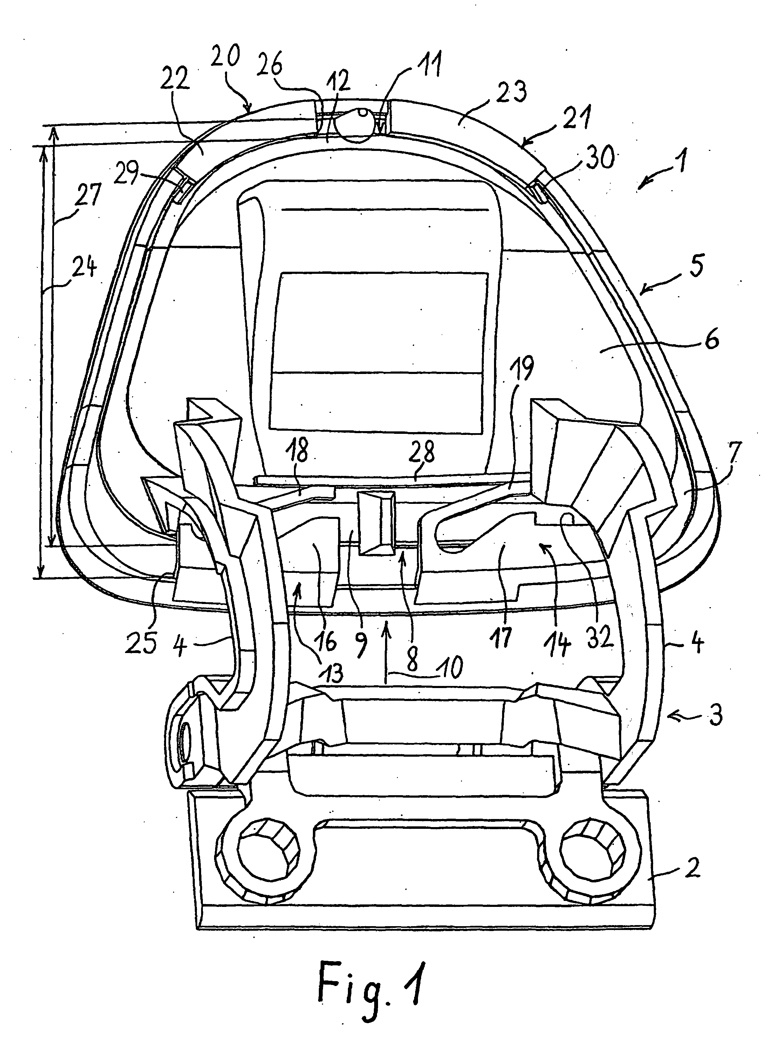

In der Figur 1 ist als Zusammenschluss zweier Kunststoffteile eine Abdeckung 1 einer Scheinwerferreinigungsanlage im Stoßfänger eines Kraftfahrzeugs dargestellt. Auf einem dem Stoßfänger zugeordneten Teil 2 ist ein Mechanismus 3 angeordnet, der über zwei Schwenkhebel 4 das Öffnen und Schließen eines Verschlusses 5 ermöglicht. Der Verschluss 5 besteht aus einem Trägerteil 6, das unmittelbar mit den Schwenkhebeln 4 einteilig verbunden ist, sowie einem auf das Trägerteil 6 aufgeschobenen Teil, das den Deckel 7 bildet.

Das Trägerteil 6 besitzt, in Aufschieberichtung 10 des Deckels 7 gesehen, an seinem vorderen Ende 8, wo die Schwenkhebel 4 befestigt sind, eine breite Leiste 9, die sich hier zu ihrem Rand hin in der Dicke verjüngt. An dem gegenüberliegenden, hinteren Ende 11 des Trägerteils 6 befindet sich eine schmalere Leiste 12. Die vordere Leiste 9 ist zusätzlich zu ihrer Breite um die Breite der hinteren Leiste 12 breiter.

Der Deckel 7 weist in Aufschieberichtung 10 gesehen an seinem vorderen Ende 8 zwei Taschen 13 und 14 auf. Diese werden durch an den Deckel 7 angespritzte Zungen 16 beziehungsweise 17 gebildet. Sie dienen der Aufnahme der vorderen Leiste 9. Jede der Zungen 16 und 17 ist so ausgebildet, dass sie ein Federelement 18 beziehungsweise 19 trägt, das eine elastische Fortsetzung der Zunge bildet.

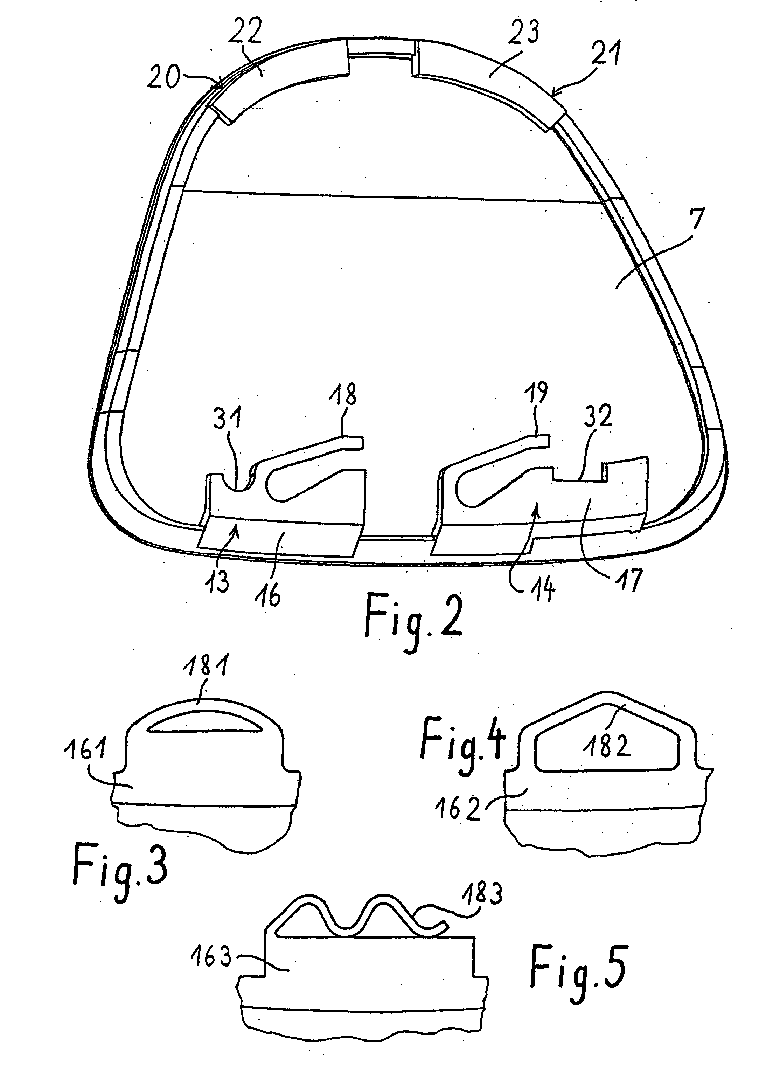

In Aufschubrichtung 10 gesehen liegen am hinteren Ende 11 des Deckels 7 ebenfalls zwei Taschen 20 und 21, in welchen die Leiste 12 eingeschoben ist. Diese Taschen werden ebenfalls aus zwei angespritzten Zungen 22 und 23 gebildet. Die Figur 2 zeigt den Deckel als Einzelteil, so dass hier der Aufbau des Deckels 7 besser erkennbar wird.

Aus der Figur 1 ist ersichtlich, dass die der vorderen Leiste 9 des Trägerteils 6 zugeordneten Taschen 13 und 14 des Deckels 7 zusätzlich zur Breite der vorderen Leiste 9 mindestens um die Breite der hinteren Leiste 12 tiefer ist.

Der Abstand 24 zwischen dem Grund 25 der vorderen Taschen 13 und 14 und den Rändern 26 der Zungen 22 und 23 der Taschen 20 beziehungsweise 21 ist hier geringfügig größer als der Abstand 27 zwischen den Rändern der Leisten 9 und 12.

Wird nun der Deckel 7 auf das Trägerteil 6 so aufgelegt, dass die Zungen 16 und 17 der Taschen 13 beziehungsweise 14, in Aufschubrichtung 10 gesehen, vor der Leiste 9 liegen und wird dann der Deckel 7 auf das Trägerteil 6 aufgeschoben, rutscht die Leiste 9 in die Taschen 13 und 14. Die Taschen 20 und 21, die zunächst auf dem Trägerteil 6 aufgelegen haben, rutschen über das hintere Ende 11, über die Leiste 12, hinweg, die damit vor die Taschen 20 und 21 zu liegen kommt. Dabei stoßen die Federelemente 18 und 19 gegen eine Leiste 28 auf dem Trägerteil 6, die zum Positionieren des Deckels 7 vorgesehen ist, und versetzten sie in Spannung.

Beim Zurückschieben des Deckels 7 gegen die Aufschieberichtung 10 greifen die Zungen 22 und 23 über die Leiste 12, so dass mit dem Einführen der Leiste 12 in die Taschen 20 und 21 ein Zusammenschluss des Deckels 7 mit dem Trägerteil 6 erfolgt.

Damit ein seitliches Verschieben des Deckels gegenüber dem Trägerteil verhindert wird, sind am hinteren Ende 11 des Trägerteils 6 zwei Rippen 29 und 30 angeordnet, an denen die Zungen 22 und 23 der Taschen 20 beziehungsweise 21 in der Endstellung des Deckels 7 anliegen.

Die Darstellung des Deckels 7 in Figur 2 zeigt, dass die Zunge 16 der Tasche 13 und die Zunge 17 der Tasche 14 jeweils eine Ausnehmung 31 beziehungsweise 32 aufweist. Diese Ausnehmungen 31 und 32 ermöglichen es, beim Aufschieben des Deckels 7 auf das Trägerteil 6 den Deckel 7 so weit in Aufschieberichtung 10 gegen die Schwenkhebel 4 zu verschieben, dass die Zungen 22 und 23 der Taschen 20 beziehungsweise 21 über die Leiste 12 am hinteren Ende 11 des Trägerteils 6 hinweg rutschen können.

Die Figuren 3, 4 und 5 zeigen mögliche Varianten der Federelemente an den Zungen der Taschen des Deckels 7. In Figur 3 ist eine Zunge 161 zu einem bügelförmigen Federelement 181 weiter ausgeformt, während in Figur 4 eine Zunge 162 einen Bügel 182 trägt, der aufgrund seiner Formgebung als Federelement elastischer ist als das in Figur 3 dargestellte. Das Federelement 183 an einer Zunge 163 in Figur 5 ist eine Weiterbildung der in den Figuren 1 und 2 dargestellten Zungen 18 und 19. Es bietet aufgrund seiner doppelten Abstützung auf einer Rippe eine noch bessere Positioniermöglichkeit des Deckels und eine noch besser verteilte Andrück- und damit Haltekraft.

## Patentansprüche

1. Zusammenschluss zweier Kunststoffteile als lösbare, formschlüssige Verbindung, wobei das eine Kunststoffteil als Trägerteil (6) und das andere Teil als ein auf das Trägerteil aufzuschiebendes Teil (7) ausgebildet ist, dass das aufzuschiebende Teil, der Deckel (7), mit sich gegenüberliegenden taschenförmigen Aufnahmen (13, 14, 20, 21) ausgestattet ist, die durch Zungen (16, 17, 22, 23) am Deckel (7) gebildet werden und zum Einschieben leistenförmiger Randbereiche (9, 12) des Trägerteils (6) dienen, dass zum Zusammenschluss der beiden Teile (6, 7) eine Aufschieberichtung (10) vorgesehen ist, die von einem vorderen Ende (8) des Trägerteils (6) mit einer Leiste (9) wegweist in Richtung auf das gegenüberliegende, hintere Ende (11) mit einer Leiste (12), dass am Trägerteil (6), in Aufschieberichtung (10) gesehen, die vordere Leiste (9) mindestens um die Breite der hinteren Leiste (12) verbreitert ist, dass die der vorderen Leiste (9) zugeordneten Taschen (13, 14) des Deckels (7) zusätzlich zur Breite der vorderen Leiste (9) mindestens um die Breite der hinteren Leiste (12) vertieft sind, dass der Abstand (24) zwischen dem Grund (25) der vorderen Taschen (13, 14) und den Rändern (26) der Zungen (22, 23) der gegenüberliegenden, hinteren Taschen (20, 21) mindestens geringfügig größer ist als der Abstand (27) der Ränder der Leisten (9, 12) auf dem Trägerteil (6) voneinander, dass vor dem Zusammenschluss der Deckel (7) zunächst so auf das Trägerteil (6) aufgesetzt ist, dass, in Aufschieberichtung (10) gesehen, die vordere Leiste (9) vor den ihr zugeordneten Taschen (13, 14) des Deckels (7) liegt, dass nach Einschieben der vorderen Leiste (9) bis auf den Grund (25) der Taschen (13, 14) die gegenüberliegenden Taschen (20, 21) so weit über die hintere Leiste (12) gerutscht sind, dass der Rand der hinteren Leiste (12) vor den Öffnungen der ihr zugeordneten Taschen (20, 21) liegt und dass nach Zurückschieben des Deckels (7) gegen die Aufschiebrichtung (10) die hintere Leiste (12) des Trägerteils (6) ebenfalls in die ihr zugeordneten Taschen (20, 21) geglitten ist und der Deckel (7) formschlüssig auf dem Trägerteil (6) fixiert ist.

2. Zusammenschluss nach Anspruch 1, **dadurch gekennzeichnet, dass** das Trägerteil (6) Rippen (28, 29, 30) aufweist, an denen die Zungen (16, 17, 22, 23) der Taschen (13, 14, 20, 21) beim Aufschieben anstoßen, zum Positionieren des Deckels (7) auf dem Trägerteil (6).

3. Zusammenschluss nach Anspruch 1 oder 2, **dadurch gekennzeichnet, dass**, in Aufschieberichtung (10) gesehen, die vorderen Taschen (13, 14) am Deckel (7) jeweils mit einem Federelement (18, 19; 181, 182, 183) ausgestattet sind, das aus der Zunge (16, 17; 161, 162, 163) der Tasche (13, 14) gebildet wird, dass auf dem Trägerteil (6) eine Rippe (28) vorgesehen ist und dass die Federelemente gegen diese Rippe (28) drücken zur Fixierung des Deckels (7) auf dem Trägerteil (6).

4. Zusammenschluss nach Anspruch 4, **dadurch gekennzeichnet, dass** die Federelemente (18, 19, 181, 182, 183) eine elastische Fortsetzung der Zungen (16, 17, 161, 162, 163) bilden.

5. Zusammenschluss nach einem der Ansprüche 1 bis 4, **dadurch gekennzeichnet, dass** das Trägerteil (6) und der auf das Trägerteil (6) aufgeschobene Deckel (7) gemeinsam eine Abdeckung (1) einer Scheinwerferreinigungsanlage im Stoßfänger eines Kraftfahrzeugs bilden.

## Claims

1. Union of two plastics portions as a releasable, form-locking connection, wherein the one plastics portion is formed as a carrier portion (6) and the other portion is formed as a portion (7) that is to be slid onto the carrier portion; the portion that is to be slid on, the cover (7), is equipped with opposing pocket-shaped receivers (13, 14, 20, 21) which are formed by tongues (16, 17, 22, 23) on the cover (7) and are used for the insertion of strip-shaped edge regions (9, 12) of the carrier portion (6); provided for the union of the two portions (6, 7) there is a sliding-on direction (10) which points away from a front end (8) of the carrier portion (6) that has a strip (9) in the direction of the opposing rear end (11) that has a strip (12); on the carrier portion (6), viewed in the sliding-on direction (10), the front strip (9) is widened at least by the width of the rear strip (12); the pockets (13, 14) of the cover (7) associated with the front strip (9) are made deeper at least by the width of the rear strip (12) in addition to the width of the front strip (9); the distance (24) between the base (25) of the front pockets (13, 14) and the edges (26) of the tongues (22, 23) of the opposing rear pockets (20, 21) is at least slightly greater than the distance (27) from each other of the edges of the strips (9, 12) on the carrier portion (6); before the union the cover (7) is first set upon the carrier portion (6) in such a way that, viewed in the sliding-on direction (10), the front strip (9) lies in front of the pockets (13, 14) of the cover (7) that are associated with it; after insertion of the front strip (9) as far as the base (25) of the pockets (13, 14) the opposing pockets (20, 21) are slipped so far over the rear strip (12) that the edge of the rear strip (12) lies in front of the openings of the pockets (20, 21) that are associated with it; and after the cover (7) has been slid back in opposition to the sliding-on direction (10) the rear strip (12) of the carrier portion (6) is also slid into the pockets (20, 21) associated with it and the cover (7) is fixed on the carrier portion (6) in a form-locking manner.

2. Union according to claim 1, **characterised in that** the carrier portion (6) has ribs (28, 29, 30) against which the tongues (16, 17, 22, 23) of the pockets (13, 14, 20, 21) abut when being slid on, for the positioning of the cover (7) on the carrier portion (6).

3. Union according to claim 1 or 2, **characterised in that**, viewed in the sliding-on direction (10), the front pockets (13, 14) on the cover (7) are each equipped with a spring element (18, 19; 181, 182, 183) which is formed from the tongue (16, 17; 161, 162, 163) of the pocket (13, 14), **in that** a rib (28) is provided on the carrier portion (6), and **in that** the spring elements press against this rib (28) for the fixation of the cover (7) on the carrier portion (6).

4. Union according to claim 4, **characterised in that** the spring elements (18, 19, 181, 182, 183) form an elastic continuation of the tongues (16, 17, 161, 162, 163).

5. Union according to one of claims 1 to 4, **characterised in that** the carrier portion (6) and the cover (7), which has been slid onto the carrier portion (6), together form a covering (1) for a headlamp-cleaning system in the bumper of a motor vehicle.

## Revendications

1. Raccordement de deux pièces en plastique au moyen d'une liaison par complémentarité de formes, séparable, réalisé comme suit :
- une pièce en plastique est constituée en pièce porteuse (6), tandis que l'autre pièce (7) est constituée pour coulisser sur la pièce porteuse
- la pièce coulissante appelée couvercle (7) présente des réceptacles (13, 14, 20, 21) en forme de poches se faisant face, constituées par des languettes (16,17, 22, 23) sur le couvercle (7) et servant à accueillir des zones marginales (9, 12) de la pièce porteuse (6), en forme de barrettes engagées par glissement
- pour raccorder les deux pièces (6, 7) il est prévu une direction de coulissement (10) qui va d'une extrémité avant (8) de la pièce porteuse, présentant une barrette (9), à l'extrémité arrière (11) située en face et présentant une barrette (12)
- sur la pièce porteuse (6), la barrette (9) située en avant par rapport au sens de coulissement est élargie d'au moins la largeur de la barrette arrière (12)
- les poches (13, 14) du couvercle (7) qui sont associées à la barrette avant (9) présentent une profondeur qui correspond à la largeur de la barrette avant (9) augmentée d'au moins la largeur de la barrette arrière (12)
- la distance entre le fond (25) des poches avant (13, 14) et les bords (26) des languettes (22, 23) des poches arrières (20, 21) situées en face, est au moins un peu plus grande que la distance (27) séparant les bords des barrettes (9, 12) situées sur la pièce porteuse (6)
- avant le raccordement, le couvercle (7) est posé d'abord sur la pièce porteuse (6), la barrette (9) située en avant par rapport à la direction de coulissement (10) se trouvant devant les poches (13, 14) du couvercle (7) qui lui sont affectées, et après glissement de cette barrette jusqu'au fond des poches (13, 14), les poches (20, 21) situées en face sont glissées sur la barrette arrière (12) jusqu'à ce que le bord de la barrette arrière (12) se trouve devant les ouvertures des poches qui lui sont affectées (20,21)
- en reculant le couvercle (7) dans le sens opposé au sens de coulissement (10), la barrette arrière (12) de la pièce porteuse (6) est glissée également dans les poches (20, 21) qui lui sont affectées et le couvercle (7) se trouve fixé par complémentarité de formes sur la pièce porteuse.

2. Raccordement selon la revendication 1, **caractérisé en ce que** la pièce porteuse (6) présente des nervures (28, 29, 30) sur lesquelles viennent s'appliquer les languettes (16, 17, 22, 23) des poches (13, 14, 20, 21) lors du coulissement, afin de positionner le couvercle (7) sur la pièce porteuse (6).

3. Raccordement selon la revendication 1 ou 2, **caractérisé en ce que** les poches (13, 14) qui se trouvent sur le couvercle (7), en avant par rapport à la direction de coulissement (10), comportent chacune un élément élastique (18, 19 ; 181, 182, 183) formé dans la languette (16, 17 ; 161, 162, 163) de la poche (13, 14), et il est prévu sur la pièce porteuse (6) une nervure (28) sur laquelle s'appliquent en pression les éléments élastiques servant à fixer le couvercle (7) sur la pièce porteuse (6).

4. Raccordement selon la revendication 3, **caractérisé en ce que** les éléments élastiques (18, 19 ; 181, 182, 183) constituent chacun un prolongement élastique des languettes (16, 17; 161, 162, 163)

5. Raccordement selon une des revendications 1 à 4, **caractérisé en ce que** la pièce porteuse (6) et le couvercle (7) glissé sur la pièce porteuse (6), formant ensemble une couverture (1) d'une installation de nettoyage de projecteurs monté dans le pare-chocs d'un véhicule automobile.
